Europäisches Patentamt

European Patent Office

Office européen des brevets

(19)

(11) EP 1 460 854 A1

(12) EUROPEAN PATENT APPLICATION
published in accordance with Art. 158(3) EPC

(43) Date of publication:
22.09.2004 Bulletin 2004/39

(51) Int Cl.⁷: H04N 7/32

(21) Application number: 02793365.4

(22) Date of filing: 24.12.2002

(86) International application number:
PCT/JP2002/013413

(87) International publication number:
WO 2003/056838 (10.07.2003 Gazette 2003/28)

(84) Designated Contracting States:
AT BE BG CH CY CZ DE DK EE ES FI FR GB GR
IE IT LI LU MC NL PT SE
Designated Extension States:
AL LT LV MK RO

(30) Priority: 25.12.2001 JP 2001391441

(71) Applicant: MATSUSHITA ELECTRIC INDUSTRIAL
CO., LTD.
Kadoma-shi, Osaka 571-8501 (JP)

(72) Inventors:
• KAWAHARADA, Makoto
Settsu-shi, Osaka 566-0011 (JP)
• YASUNARI, Tomoko
Neyagawa-shi, Osaka 572-0004 (JP)

(74) Representative: Grünecker, Kinkeldey,
Stockmair & Schwanhäusser Anwaltssozietät
Maximilianstrasse 58
80538 München (DE)

(54) MOVING PICTURE COMPRESSION/CODING APPARATUS AND MOTION VECTOR
DETECTION METHOD

(57) In conventional moving image compression coding apparatuses, in the case of a largely moving image, it is impossible to detect an appropriate motion vector, and further, it is difficult to set an appropriate motion vector detection area.

The following are provided: motion vector detecting means (12) of detecting a motion vector within a first motion vector detection area from a decoded moving image signal and a macroblock moving image signal; motion vector counting means (14, 15, 16) of counting the number of first motion vectors which is the number of motion vectors existing on a first outermost line which is the outermost line of the first motion vector detection area and on one or a plurality of second outermost lines adjoining the first outermost line which second outermost lines are each the outermost line of a second motion vector detection area existing inside the first motion vector detection area; and motion vector detection area determining means (13) of enlarging the first motion vector detection area based on the counted number of first motion vectors.

Fig. 1

EP 1 460 854 A1

**Description**

TECHNICAL FIELD

The present invention relates to a moving image compression coding apparatus of compression-coding a moving image, and a motion vector detecting method, a recording medium and a program thereof.

BACKGROUND ART

In a moving image compression coding apparatus, increasing the motion vector detection accuracy of a motion vector detecting apparatus inevitably increases the hardware scale. For this reason, motion vector detection is performed in a mode where the detection accuracy is high although the detection area is small or in a mode where the detection accuracy is low although the detection area is large.

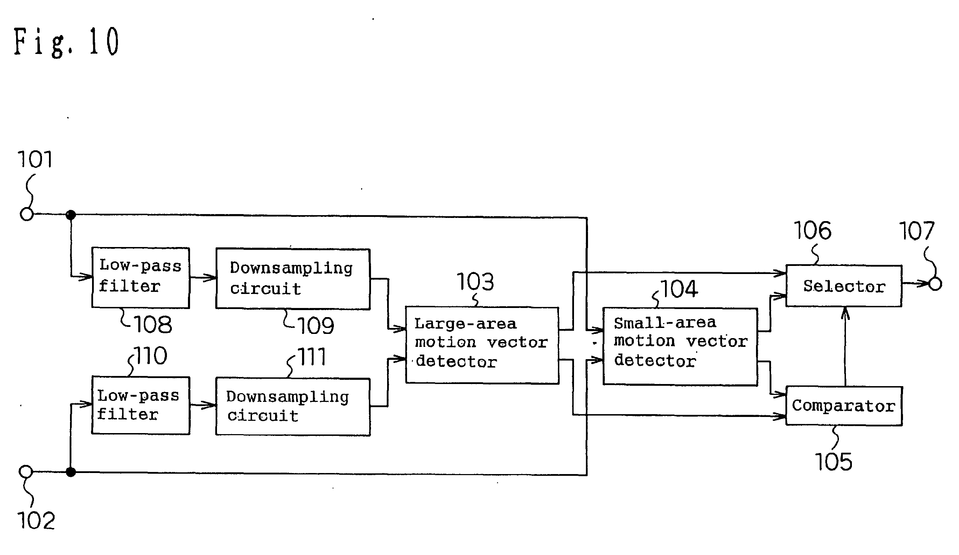

As a conventional motion vector detecting apparatus, for example, one described in Japanese Laid-Open Patent Application No. H09-224249 is known. The entire disclosure of Japanese Laid-Open Patent Application No. H09-224249 is incorporated herein by citation (by reference) in their entirety. The motion vector detecting apparatus is shown in FIG. 10. Reference numeral 101 represents a reference frame signal input terminal inputting a reference frame signal which is the current frame signal to a moving image compression coder. Reference numeral 102 represents a predicted frame signal input terminal inputting a predicted frame signal which is the immediately preceding frame signal to the moving image compression coder. Reference numeral 103 represents a large-area motion vector detector operating in a mode where the detection accuracy is low although the detection area is large, and performing motion vector detection. Reference numeral 104 represents a small-area motion vector detector operating in a mode where the detection accuracy is high although the detection area is small, and performing motion vector detection. Reference numeral 105 represents a comparator comparatively evaluating the motion vector detection results obtained by the large-area motion vector detector 103 and the small-area motion vector detector 104. Reference numeral 106 represents a selector outputting either of the motion vector detection results from the large-area motion vector detector 103 and the small-area motion vector detector 104 based on the comparison result of the comparator 105. Reference numeral 107 represents an output terminal outputting the motion vector detected by the large-area motion vector detector.

The operation of the conventional motion vector detector structured as described above will be described. First, the reference frame signal inputted from the reference frame signal input terminal 101 passes through a low-pass filter 108 and a downsampling circuit 109 and is inputted to the large-area motion vector detector 103. In parallel therewith, the reference frame signal inputted from the reference frame signal input terminal 101 is inputted to the small-area motion vector detector 104. Likewise, the predicted frame signal inputted from the predicted frame signal input terminal 102 passes through a low-pass filter 110 and a downsampling circuit 111 and is inputted to the large-area motion vector detector 103. In parallel therewith, the predicted frame signal inputted from the predicted frame signal input terminal 102 is inputted to the small-area motion vector detector 104. The motion vectors detected by the motion vector detectors 103 and 104 are comparatively evaluated by the comparator 105, and the more highly evaluated one of the motion vectors is outputted from the selector 106 to the output terminal 107.

However, according to the structure of the motion vector detecting apparatus of FIG. 10, when the number of motion vector detection areas (hereinafter, referred to as the number of modes) is, for example, 2 in order to detect a more appropriate motion vector, the hardware scale is larger than that in a case where the number of modes is one.

That is, when the number of motion vector detection areas is two, for example, a motion vector detection area where the detection accuracy is high although the detection area is small and a motion vector detection area where the detection accuracy is low although the detection area is large, it is necessary to provide two kinds of hardware, the small-area motion vector detector 104 being high in detection accuracy although small in detection area and the large-area motion vector detector 103 being low in detection accuracy although large in detection area. And it is necessary for each of the motion vector detectors to perform motion vector detection at the same time and this makes it essential that the two motion vector detectors 103 and 104 each have an independent motion vector detecting circuit, so that the scale of hardware such as the motion vector detecting circuit increases.

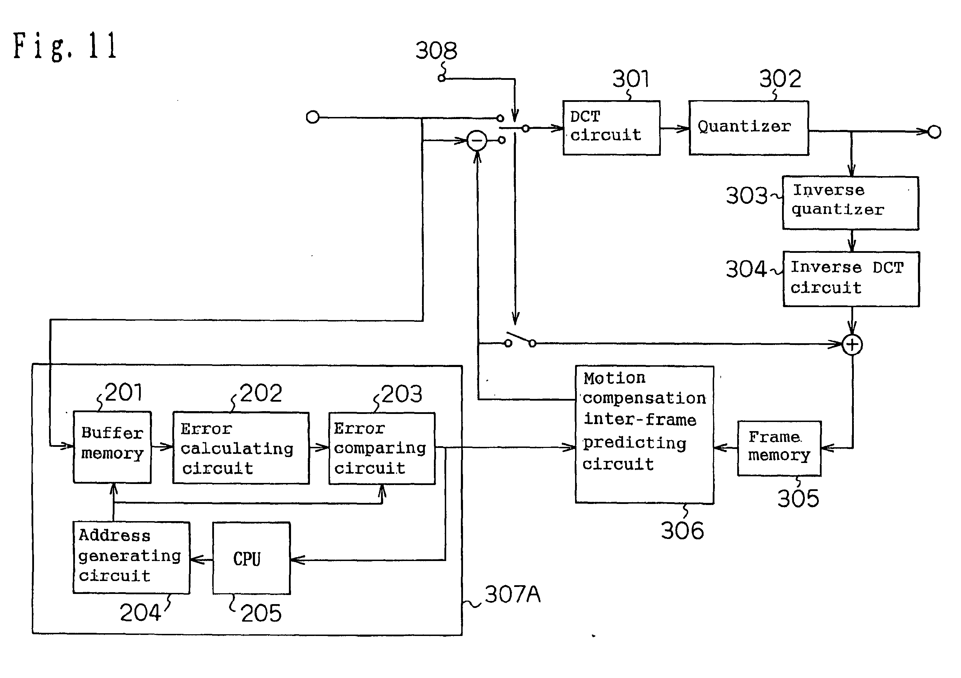

To solve the problem of the conventional motion vector detecting apparatus described with reference to FIG. 10, for example, a moving image compression coding apparatus described in Japanese Laid-Open Patent Application No. H10-23420 is known. The entire disclosure of Japanese Laid-Open Patent Application No. H10-23420 is incorporated herein by citation (by reference) in their entirety. The moving image compression coding apparatus is shown in FIG. 11.

FIG. 11 is a block diagram of the conventional moving image compression coding apparatus. In FIG. 11, reference numeral 301 represents a DCT circuit, reference numeral 302 represents a quantizer, reference numeral 303 represents an inverse quantizer, reference numeral 304 represents an inverse DCT circuit, reference numeral 305 represents a frame memory, reference numeral 306 represents a motion compensation inter-frame predicting circuit, reference numeral 307 represents a motion detector, and reference numeral 308 represents an intra-frame/inter-frame switching signal. The motion detector 307A comprises a buffer memory 201, an error calculating circuit 202, an error comparing circuit 203 and an address generating circuit 204.

The operation of the conventional image coding apparatus structured as described above will be described. The initial frame to be coded, that is, the first frame is switched to intra-frame coding by the intra-frame/inter-frame switching signal 308, and intra-frame coding is performed frame by frame without the difference being obtained. That is, image data is converted into a conversion factor by the DCT circuit in units of two-dimensional blocks, and the conversion factor is quantized by the quantizer 302 and is then sent out to a transmission path. In general, since images are high in correlation, when DCT is performed, energy concentrates on conversion factors corresponding to low-frequency components. Therefore, by coarsely quantizing high frequency components which are visually inconspicuous, and finely quantizing low frequency components which are important components, it is possible to minimize image degradation and reduce the data amount. The quantized conversion factor sent out to the transmission path is, at the same time, converted back to real-time data through the inverse quantizer 303 and the inverse DCT circuit 304, and stored into the frame memory 305.

On the other hand, for the images of the second and succeeding frames, the coding method is switched to inter-frame coding by the intra-frame/inter-frame switching signal 308, and after motion compensation is performed, the difference from the preceding frame image is obtained and the image signal difference between frames is coded frame by frame. That is, predicted values of the images of the second and succeeding frames are generated by the motion compensation inter-frame predicting circuit 306 based on the image data of the preceding frame stored in the frame memory 305 and the motion vectors in the two-dimensional block units detected by the motion detector 307A, and prediction errors which are the differences between the images of the second and succeeding frames and the predicted values of the second and succeeding frames generated by the motion compensation inter-frame predicting circuit 306 are converted into conversion factors in units of two-dimensional blocks by the DCT circuit 301. The conversion factors are quantized by the quantizer 302 and are then sent out to the transmission path. The quantized conversion factors sent out to the transmission path are, at the same time, converted back to real-time data through the inverse quantizer 303 and the inverse DCT circuit 304 and stored into the frame memory 305.

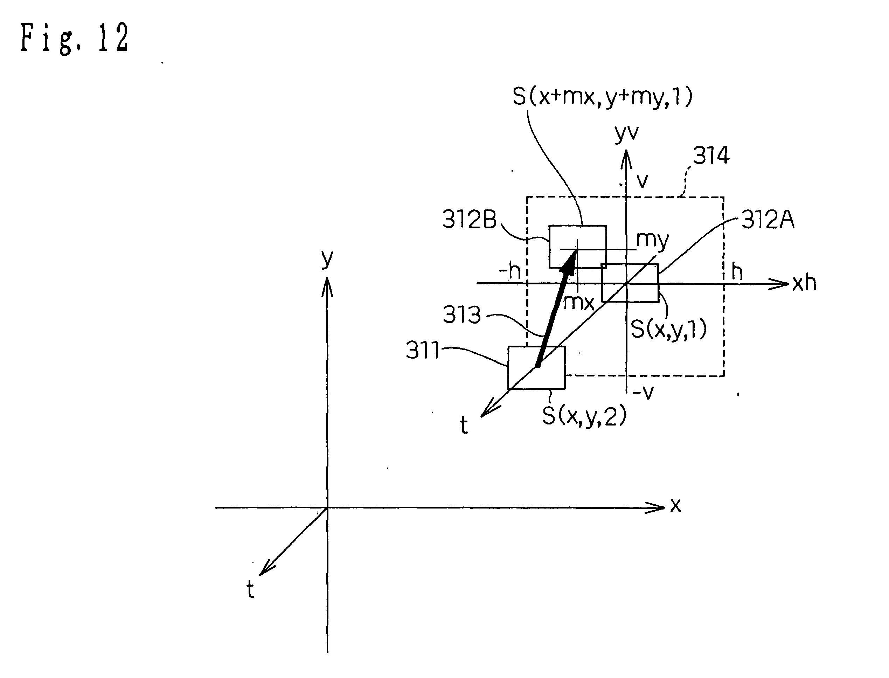

Next, the motion detector 307A will be described in detail. The motion detector 307A obtains inter-frame motion vectors in units of two-dimensional block by use of, for example, a well-known full-search method. FIG. 12 is an explanatory view showing the operation of the motion detector 307A. The motion detection operation will be described with reference to FIG. 12. In FIG. 12, reference numeral 311 represents a two-dimensional block of the second frame comprising a rectangular block of m (horizontal direction) × n (vertical direction) pixels. Reference numerals 312A and 312B represent two-dimensional blocks of the first frame for performing error calculation. The blocks 312A and 312B have the same size as the two-dimensional block 311. Reference numeral 313 represents a motion vector obtained by motion detection. This motion vector connects between the central coordinates of the two-dimensional block 311 and the central coordinates of the two-dimensional block 312B.

The two-dimensional block 311 in FIG. 12 is a two-dimensional block having central coordinates (x,y,2) in the second frame, and the two-dimensional block is represented by a designation S (x,y,2) corresponding to the central coordinates. The two-dimensional blocks 312A and 312B are two-dimensional blocks having central coordinates (x,y, 1) and (x+mx,y+my,1) in the first frame, respectively, and the two-dimensional blocks are similarly represented by designations S(x,y,2) and S(x+mx,y+my,1) corresponding to the central coordinates. Here, x represents the pixel coordinate in the horizontal direction with the center of the frame as the origin, y represents the pixel coordinate in the vertical direction with the center of the frame as the origin, and the numbers 1 and 2 following x,y represent the frame numbers. Reference numeral 314 represents a motion vector detection area of a rectangular shape (2h in the horizontal direction and 2v in the vertical direction) showing a two-dimensional block where motion vector calculation is performed. xh represents the local pixel coordinate in the horizontal direction with the center of the motion vector detection area (in the figure, the coordinates (x,y,1)) as the origin, and yv represents the local pixel coordinate in the vertical direction with the center of the motion vector detection area (in the figure, the coordinates (x,y,1)) as the origin.

When inter-frame-coded, the image data of the second frame is inputted to the buffer memory 201 at the same time. The image data of the first frame has already been stored in the buffer memory 201. With the two-dimensional block 311 of the second frame (current frame) as the reference, the motion vector 313 between the two-dimensional block 312B of the first frame (preceding frame) and the two-dimensional block 311 of the second frame (current frame) is detected. The images of the first and the second frames inputted to the buffer memory 201 are read out in units of two-dimensional blocks of m×n pixels, and motion vector detection is performed in units of two-dimensional blocks.

The procedure of the motion vector detection using coordinates will be concretely described. The image data of the two-dimensional block S(x,y,2) having the central coordinates (x,y,2) in the second frame is read out by the address generating circuit 204, and using the two-dimensional block S (x, y, 2) as the reference block, the motion between the reference block and the first frame is detected by the following procedure: In the buffer memory 201, the image data of the first frame is also stored as mentioned above, and then, each image data of the two-dimensional block $S(x,y,1)$ having the central coordinates $(x,y,1)$ in the first frame is read out. The error calculating circuit 202 calculates the sum of the square errors of the amplitudes of the image data in the two two-dimensional blocks $S(x,y,2)$ and $S(x,y,1)$ (hereinafter, referred to merely as errors) $\sigma(x,y)(0,0)$ by [Expression 1], and the calculated sum is transmitted to the error comparing circuit 203.

(Expression 1)

$$\sigma(x,y)(0,0) = \sum_{y'=-n}^{n} \sum_{x'=-m}^{m} (S(x+x', y+y', 2) - S(x+x', y+y', 1))^2$$

Then, the address generating circuit 204 generates the address of the m×n block neighboring by one pixel in the horizontal direction in the first frame, that is, a two-dimensional block $S(x+1,y,1)$ of central coordinates $(x+1,y,1)$. The error calculating circuit 202 similarly calculates $\sigma(x,y)(+1,0)$ and transmits it to the error comparing circuit 203. The error comparing circuit 203 compares $\sigma(x,y)(0,0)$ and $\sigma(x,y)(+1,0)$ with each other, and selects the smaller one of them. Then, likewise, the image data of two-dimensional blocks are read out while the address is successively changed within the area of -h<xh<h and -v<yv<v, and $\sigma(x,y)$ (xh, yv) is calculated.

The error comparing circuit 203 selects an error U (x,y) (mx,my) taking the lowest value from among the errors $\sigma(x,y)(xh,yv)$ calculated in the above, and outputs an address mx,my at the same time. Consequently, the motion vector 213 in the two-dimensional block $S(x,y,2)$ is mv(mx,my) . By repeating the above-described operation for all of the more than one divisional two-dimensional block in the second frame, the motion vectors in all the two-dimensional blocks in the second frames are obtained.

The motion compensation inter-frame predicting circuit 306 generates a motion-compensated predicted value of the second frame in units of two-dimensional blocks by use of the motion vector detected in each two-dimensional block in the second frame. For the image of the second frame, first, the difference from the predicted value generated by the above-described method, that is, the prediction error is calculated from the image data of the first frame and the motion vector of the second frame. Then, the above-mentioned prediction error is coded frame by frame by a method similar to that used in the case of the first frame.

By the above-described structure, within a predetermined motion vector detection area of the preceding frame whose center is the position of a two-dimensional block obtained by dividing the current frame, the image data of a two-dimensional block having the same size as the two-dimensional block obtained by dividing the current frame is extracted while the position is successively changed, error calculation between the image data of each two-dimensional block within the predetermined motion vector detection area of the preceding frame and the image data of the two-dimensional block obtained by dividing the current frame and error comparison between two-dimensional blocks of different positions within the predetermined motion vector detection area of the preceding frame are performed to thereby search for the two-dimensional block position, within the predetermined motion vector detection area of the preceding frame, where the image data error is smallest with respect to the two-dimensional block obtained by dividing the current frame, and from the position of the two-dimensional block obtained by diving the current frame and the two-dimensional block position, within the predetermined motion vector detection area of the preceding frame, where the image data error is smallest with respect to the two-dimensional block obtained by dividing the current frame, the motion vector representative of an on-screen motion, from the preceding frame, of the two-dimensional block obtained by dividing the current frame is calculated.

According to the above-described method, since the prediction error is coded, the energy is smaller and higher-efficiency coding is enabled than when the image data is directly coded like intra-frame coding.

Next, the operation for the third and succeeding frames will be described. In calculating the motion vectors of the third and succeeding frames, the motion vector of the preceding frame (in the case of the third frame, the second frame) is inputted to a CPU 205 as motion vector detection area determining information representative of the magnitude of the motion of the image and detected earlier, and the motion vector detection area is changed by controlling the address generating circuit 204 by performing a calculation processing as shown below.

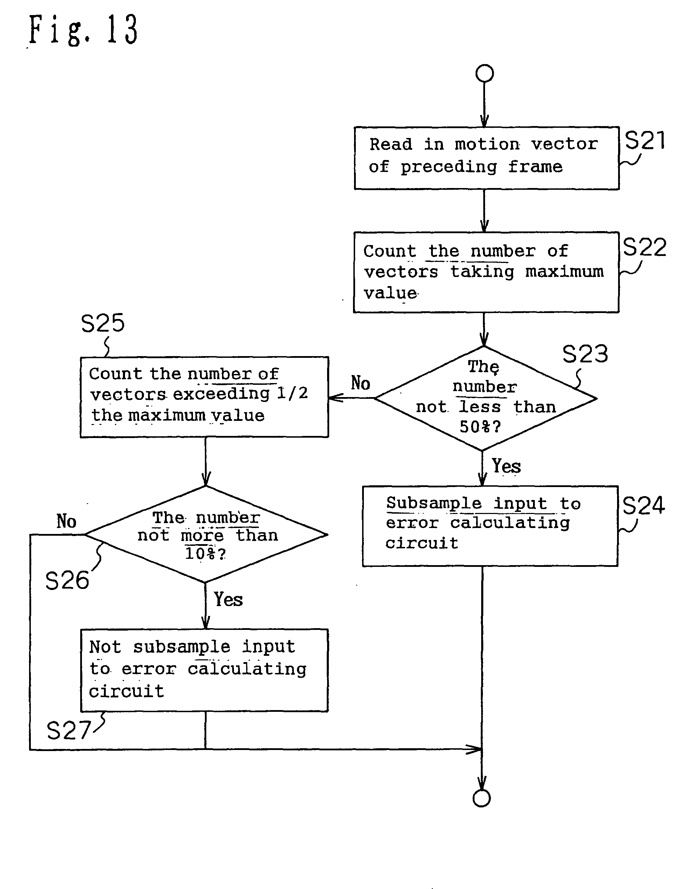

FIG. 13 is a flowchart showing the processing operation of the CPU 5. Describing FIG. 13, at step 21, the motion vectors of all the two-dimensional blocks of the preceding frame (for example, the second frame) are read in, and at step 22, the number of motion vectors taking a maximum value h in the horizontal direction in the motion vector detection area in normal times is counted. At step 23, it is determined whether the number is not less than 50 of all the blocks or not, and when the number is not less than 50% of all the blocks, determining that the motion of the image is large, the motion vector detection range in the horizontal direction is enlarged, for example, to 2h. To double the motion vector detection area, as shown at step 24, the address generating circuit 4 is controlled so that the input to the error calculating circuit 2 is inputted being thinned out every sample, that is, subsampled to 1/2. By doing this, the calculation amount per two-dimensional block is 1/2, so that even if the motion vector detection area is doubled, the total calculation amount is the same as that when the motion vector detection area is not enlarged. Moreover, as shown at step 25, the number of motion vectors exceeding h/2 is counted at the same time, and at step 26, it is determined whether the number of motion vectors exceeding h/2 is not more than 10% or not. When the number is not more than 10%, determining that the motion is small, the motion vector detection area is made h/2. In this case, the input to the error calculating circuit 2 is inputted without thinned out (step 27). When the number of motion vectors exceeding h is less than 50% and the number of motion vectors exceeding h/2 is more than 10%, the motion vector detection area is not changed and no subsampling is performed.

By the above-described operation, when the motion of the image is large, the motion vector detection area can be enlarged without the calculation amount increased. In general, when motion detection is performed from a subsampled image, the motion detection accuracy decreases and this leads to image quality degradation. However, when the motion is large, since the influence of the image degradation caused because the motion does not follow is larger, the image quality is higher when the motion vector detection area is enlarged even though the image is subsampled. When the motion is small, since motion detection is performed with an image not being subsampled, no image degradation occurs, and further, since the motion vector detection area is reduced, the processing time required for the search can be reduced.

As described above, the motion vector detection area can be changed in accordance with the motion of the image, a large motion can be handled and the inter-frame difference can be reduced, so that no image quality degradation occurs. Further, since the computing amount for the motion vector calculation does not increase, the hardware amount for the motion vector calculation does not increase.

However, in the conventional moving image compression coding apparatus described with reference to FIG. 11, for a largely moving image, it is impossible to detect appropriate motion vector, and further, it is difficult to set an appropriate motion vector detection area.

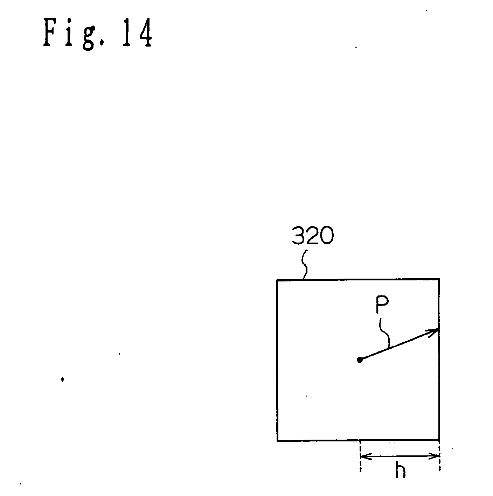

That is, in the conventional moving image compression coding apparatus described with reference to FIG. 11, as shown in FIG. 14, the motion vector detection area 320 is enlarged when the number of motion vectors P riding on the outermost periphery of the motion vector detection area 320 is not less than 50% of the total number of blocks. That is, only the motion vector P riding on the outermost periphery of the motion vector detection area 320 is detected. However, there is a possibility that a motion vector more appropriate than the motion vector P riding on the outermost periphery of the motion vector detection area 320 exits outside the motion vector detection area 320. Even in such a case, in the conventional moving image compression coding apparatus described with reference to FIG. 11, the motion vector P is detected and used instead of detecting an appropriate motion vector.

That is, in the conventional moving image compression coding apparatus, for a largely moving image, it is impossible to detect an appropriate motion vector, and further, it is difficult to set an appropriate motion vector detection area.

DISCLOSURE OF INVENTION

In view of the above-mentioned problem, an object of the present invention is to provide a moving image compression coding apparatus, a moving vector detecting method, a recording medium and a program capable of detecting an appropriate motion vector and setting an appropriate motion vector detection area even in the case of a largely moving image.

To solve the above-described problems, a first invention of the present invention is a moving image compression coding apparatus comprising:

macroblock generating means (2) of generating a macroblock moving image signal obtained by fractionizing an input moving image into a number, N, of units per frame (here, N is a natural number not less than 2);

coding and decoding means (18, 17, 3, 4, 9, 10, 19, 20 and 11) of compression-coding the macroblock moving image signal and then, decoding the macroblock moving image signal to generate a decoded moving image signal;

motion vector detecting means (12) of detecting a motion vector within a first motion vector detection area from the decoded moving image signal and the macroblock moving image signal;

motion vector counting means (14, 15 and 16) of counting, as the number of first motion vectors, the number of, of the detected motion vectors, motion vectors existing between a first outermost line which is an outermost line of the first motion vector detection area and a second outermost line which is an outermost line of a second motion vector detection area existing inside the first motion vector detection area; and

motion vector detection area determining means (13) of enlarging the first motion vector detection area based on the counted number of first motion vectors.

A second invention of the present invention is a moving image compression coding apparatus according to the first invention of the present invention, wherein the motion vector counting means (14, 15 and 16) counts , as the number of second motion vectors, the number of motion vectors existing in a third motion vector detection area existing inside the second motion vector detection area, and

the motion vector detection area determining means (13) reduces the first motion vector detection area based on the counted number of second motion vectors.

A third invention of the present invention is a moving image compression coding apparatus according to the first invention of the present invention, wherein the motion vector detection area determining means (13) enlarges the first motion vector detection area when the counted number of first motion vectors is larger than a predetermined threshold value, and does not enlarge the first motion vector detection area or does not change the first motion vector detection area when the counted number of first motion vectors is smaller than the predetermined threshold value.

A fourth invention of the present invention is a moving image compression coding apparatus according to the first invention of the present invention, wherein the motion vector detection area determining means (13) increases an enlargement ratio of the first motion vector detection area as the counted number of first motion vectors increases.

A fifth invention of the present invention is a moving image compression coding apparatus according to the second invention of the present invention, wherein the motion vector detection area determining means (13) increases a reduction ratio of the first motion vector detection area as the counted number of second motion vectors increases.

A sixth invention of the present invention is a moving image compression coding apparatus according to the first invention of the present invention, wherein the motion vector detection area determining means (13) is preprovided with a plurality of kinds of motion vector detection areas, and

a larger motion vector detection area is selected from among the kinds of motion vector detection areas as the counted number of first motion vectors increases, and the selected motion vector detection area is set as the first motion vector detection area.

A seventh invention of the present invention is a moving image compression coding apparatus according to the second invention of the present invention, wherein the motion vector detection area determining means (13) is preprovided with a plurality of kinds of motion vector detection areas, and

a smaller motion vector detection area is selected from among the kinds of motion vector detection areas as the counted number of second motion vectors increases, and the selected motion vector detection area is set as the first motion vector detection area.

An eighth invention of the present invention is a moving image compression coding apparatus according to the first invention of the present invention, wherein the motion vector detection area determining means (13) updates the first motion vector detection area every P frame or every divisional unit obtained by dividing the P frame into a number, n, of units (here, n is a natural number of $n \leq N$), and

when the first motion vector detection area is updated, the motion vector detection area determining means enlarges the first motion vector detection area when a quotient when the counted number of first motion vectors in the P frame or the divisional unit is divided by the number of macroblock moving image signals existing in the P frame or in the divisional unit is not less than a predetermined threshold value.

A ninth invention of the present invention is a moving image compression coding apparatus according to the first invention of the present invention, wherein the motion vector detection area determining means (13) updates the first motion vector detection area every P frame or every divisional unit obtained by dividing the P frame into a number, n, of units (here, n is a natural number of $n \leq N$), and

when the first motion vector detection area is updated, the motion vector detection area determining means reduces the first motion vector detection area when a quotient when the counted number of second motion vectors in the P frame or the divisional unit is divided by the number of macroblock moving image signals existing in the P frame or in the divisional unit is not less than a predetermined threshold value.

A tenth invention of the present invention is a moving image compression coding apparatus according to any of the first, the third, the fourth, the sixth and the eighth inventions of the present invention, wherein the motion vector detecting means also enlarges the second motion vector detection area when enlarging the first motion vector detection area.

An eleventh invention of the present invention is a moving image compression coding apparatus according to any of the second, the fourth, the seventh and the ninth inventions of the present invention, wherein the motion vector detecting means also reduces the third motion vector detection area when reducing the first motion vector detection area.

A twelfth invention of the present invention is a motion vector detecting method comprising:

a motion vector detecting step of detecting a motion vector within a first motion vector detection area from a decoded moving image signal generated by compression-coding a macroblock moving image signal generated by fractionizing an input moving image into a number, N, of units per frame (here, N is a natural number not less than 2) and then, decoding the compression-coded macroblock moving image signal, and from the macroblock moving image signal;

a motion vector counting step of counting, as the number of first motion vectors, the number of, of the detected motion vectors, motion vectors existing between a first outermost line which is an outermost line of the first motion vector detection area and a second outermost line which is an outermost line of a second motion vector detection area existing inside the first motion vector detection area;

a motion vector counting step of counting the number of first motion vectors which is the number of motion vectors existing on the first outermost line which is the outermost line of the first motion vector detection area and on one or a plurality of second outermost lines adjoining the first outermost line, said second outermost lines each being the second outermost line which is the outermost line of the second motion vector detection area inside the first motion vector detection area; and

a motion vector detection area determining step of enlarging the first motion vector detection area based on the counted number of first motion vectors.

A thirteenth invention of the present invention is a program of causing a computer to execute the following steps of the motion vector detecting method according to the twelfth invention of the present invention:

the motion vector detecting step of detecting a motion vector within the first motion vector detection area from the decoded moving image signal generated by compression-coding the macroblock moving image signal generated by fractionizing an input moving image into a number, N, of units per frame (here, N is a natural number not less than 2) and then, decoding the compression-coded macroblock moving image signal, and from the macroblock moving image signal;

the motion vector counting step of counting, as the number of first motion vectors, the number of, of the detected motion vectors, motion vectors existing between the first outermost line which is the outermost line of the first motion vector detection area and the second outermost line which is the outermost line of the second motion vector detection area existing inside the first motion vector detection area; and

the motion vector detection area determining step of enlarging the first motion vector detection area based on the counted number of first motion vectors.

A fourteenth invention of the present invention is a computer-processable recording medium holding the program according to the thirteenth invention of the present invention.

BRIEF DESCRIPTION OF DRAWINGS

FIG. 1 is a block diagram of a moving image compression coding apparatus according to a first embodiment of the present invention;
FIG. 2 is a view showing an example of motion vectors in macroblocks in the first embodiment of the present invention;
FIG. 3 is a view showing an example of the motion vector and motion vector switching areas in the first embodiment of the present invention;

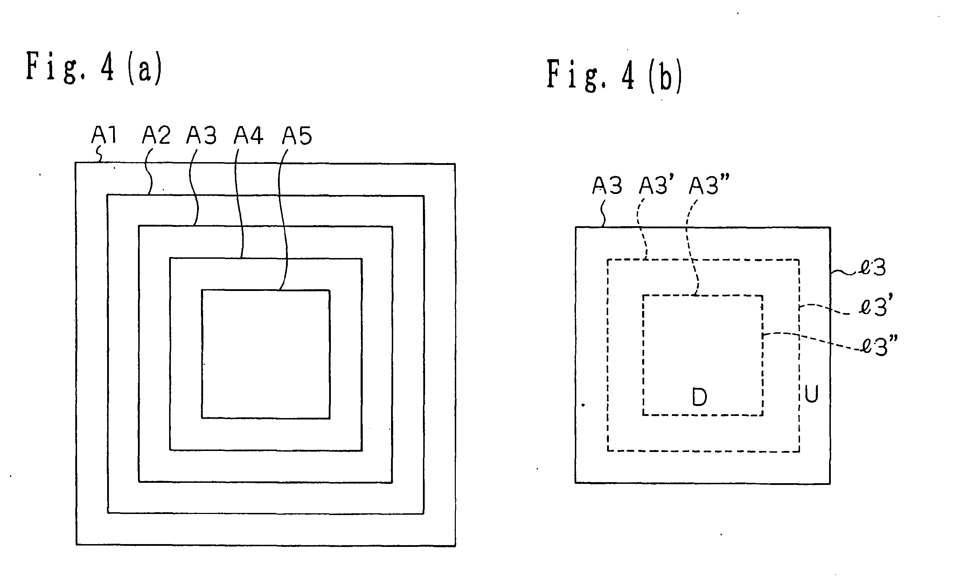

(a) of FIG. 4 is a view showing motion vector detection area candidates in the first embodiment of the present invention;
(b) of FIG. 4 is a view showing motion vector detection areas in the first embodiment of the present invention;

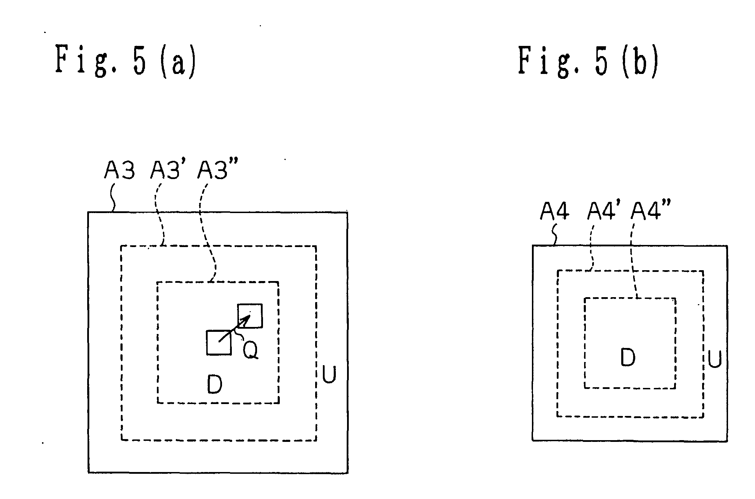

(a) of FIG. 5 is a view showing an example of the current motion vector detection areas in the first embodiment of the present invention;
(b) of FIG. 5 is a view showing an example of updated motion vector detection areas in the first embodiment of the present invention;

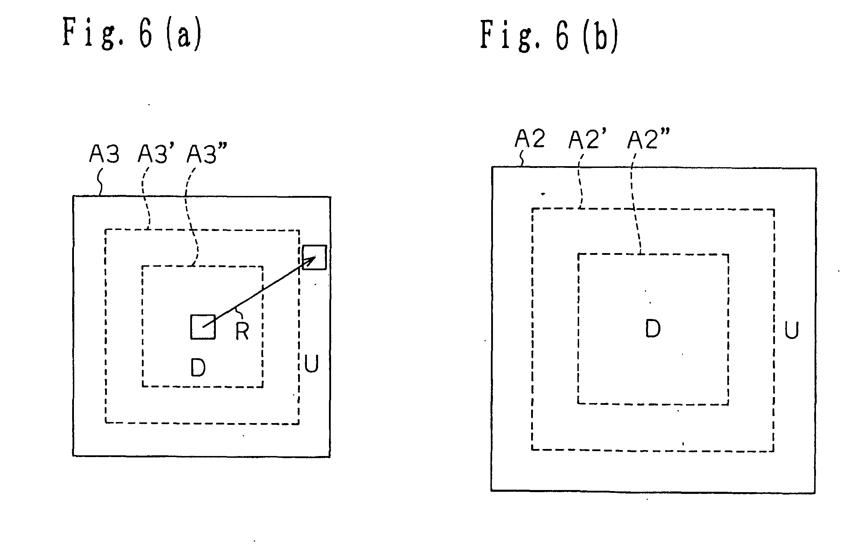

(a) of FIG. 6 is a view showing an example of the current motion vector detection areas in the first embodiment of the present invention;
(b) of FIG. 6 is a view showing an example of updated motion vector detection areas in the first embodiment of the present invention;

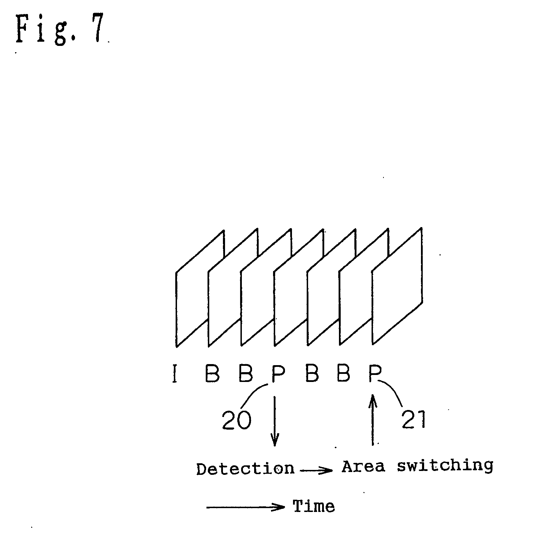

FIG. 7 is a view showing the timing of update of the motion vector detection area in the first embodiment of the present invention;

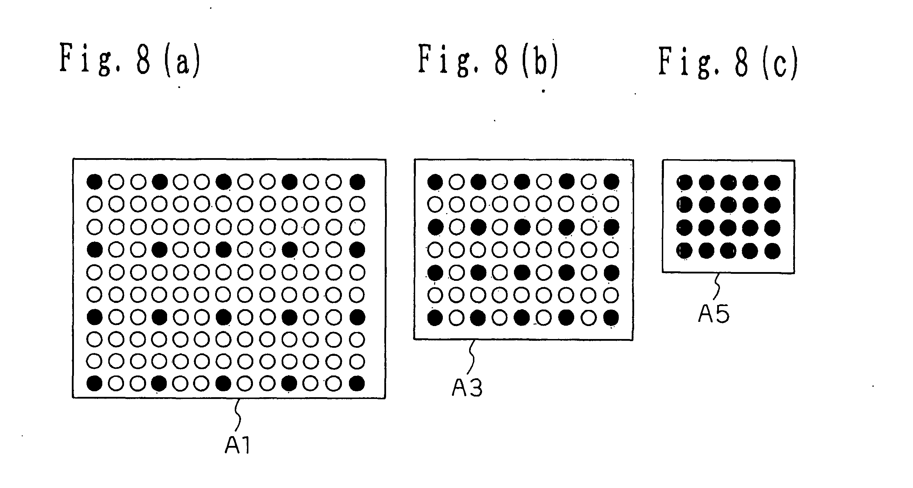

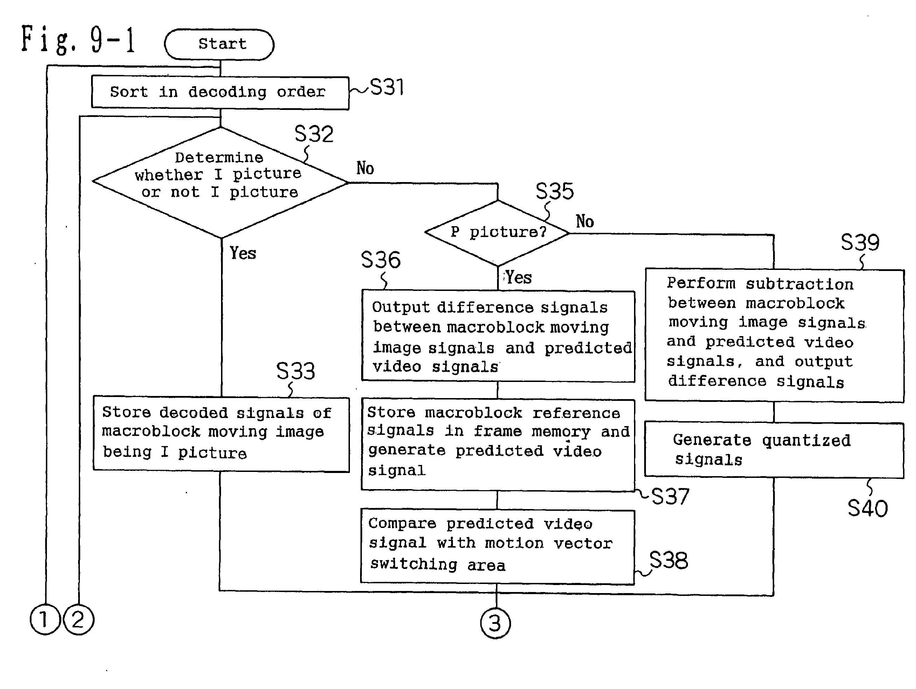

(a) of FIG. 8 is a view showing a general outline of pixel sampling in motion vector detection when the motion vector detection area is large in the first embodiment of the present invention;
(b) of FIG. 8 is a view showing a general outline of pixel sampling in motion vector detection when the motion vector detection area is of medium size in the first embodiment of the present invention;
(c) of FIG. 8 is a view showing a general outline of pixel sampling in motion vector detection when the motion vector detection area is small in the first embodiment of the present invention;

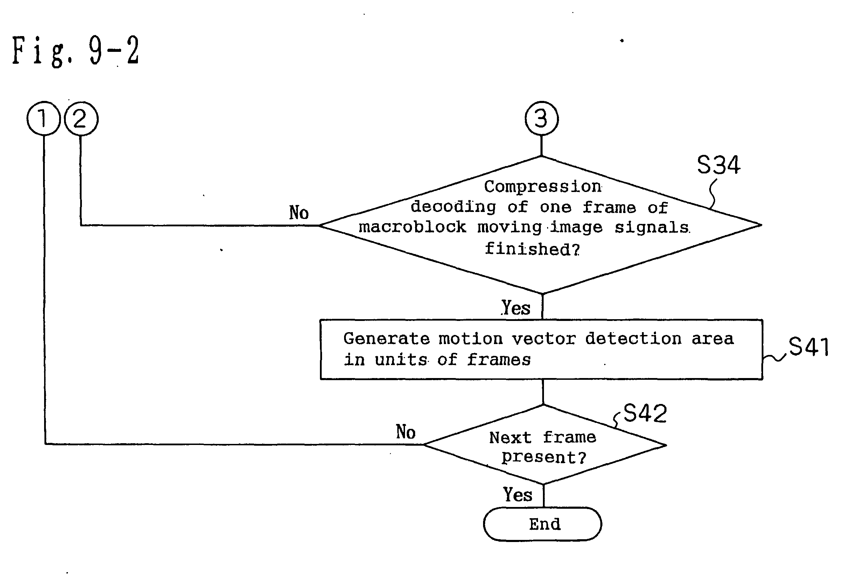

FIG. 9 is a flowchart of motion vector switching area determination in the first embodiment of the present invention;
FIG. 10 is a block diagram showing the structure of the conventional motion vector detecting apparatus;
FIG. 11 is a block diagram showing the structure of the conventional moving image compression coding apparatus;
FIG. 12 is an explanatory view showing the operation of the motion detector 307A included in the conventional moving image compression coding apparatus;
FIG. 13 is a flowchart showing the processing operation of the CPU 5 included in the conventional moving image compression coding apparatus; and
FIG. 14 is a view showing an example of the motion vector detection area and the motion vector of the conventional moving image compression coding apparatus.

(Explanation of Reference Numerals)

| | |
|---|---|
| 1 | Input terminal |
| 2 | Frame sorter |
| 3 | DCT |
| 4 | Quantizer |
| 5 | Variable-length coder |
| 6 | Buffer |
| 7 | Output terminal |
| 8 | Rate controller |
| 9 | Inverse quantizer |
| 10 | Inverse DCT |
| 11 | Frame memory |
| 12 | Predictor |
| 13 | Motion vector detection area determinr |
| 14 | Switching area detector |
| 15 | Comparator |
| 16 | Counter |
| 17 | Subtracter |
| 18 | Selector switch |
| 19 | Adder |
| 20 | Switch |
| 21 | Motion vector detecting means |

BEST MODE FOR CARRYING OUT THE INVENTION

Hereinafter, an embodiment of the present invention will be described with reference to the drawings.

According to the embodiment of the present invention, for example, since a motion vector detection area adoptively obtained based on a motion vector detected by a motion vector detecting portion (means) is fed back to the motion vector detecting portion (means), the motion vector detection area where motion vector detection is performed by the motion vector detecting portion (means) can be set in accordance with the motion of the input moving image, so that even when the number of motion vector detection areas (that is, the number of modes) is more than one in order to detect a more appropriate motion vector, the circuit scale is not increased and the accuracy of the motion vector detection can be improved.

Moreover, according to the embodiment of the present invention, for example, since the motion vector detection area is fed back to the motion vector detecting portion in units into which the input moving image is fractionized, a motion vector detection area conforming to the motion of the input moving image can be appropriately set in the motion vector detecting portion in a unit of the input moving image, for example, one frame, and setting of a highly accurate motion vector detection area can be simplified.

Moreover, according to the embodiment of the present invention, for example, since an actually applied motion vector detection area is selected from among more than one kind of preprovided motion vector detection area with reference to the adoptively obtained result of the motion vector detection area, update of the motion vector detection area set in the motion vector detecting portion can be freely adopted from the more than one kind in accordance with the input moving image, and a motion vector detection conforming to the user's intension such as preference can be achieved. Moreover, a motion vector detection can be achieved in which the motion vector detection area set in the motion vector detecting portion conforms to the motion of the input moving image, for example, conforms to the user's intention.

Moreover, according to the embodiment of the present invention, for example, since feedback means feeds back the motion vector detection area determined by motion vector detection area determining means to motion vector detecting means and switching area generating means, setting of the motion vector detection area can be determined more responsively to the speed of the motion of the input moving image, so that the immediacy of the motion vector detection area conforming to the motion of the input moving image can be enhanced.

Moreover, according to the embodiment of the present invention, for example, since the motion vector detection area is switched when (the number of motion vectors existing in the motion vector switching area) / (the number of macroblocks existing in the period of a number, n, of units) is not less than a predetermined threshold and the switched motion vector detection area is fed back to the motion vector detecting means and to the switching area generating means, the generated code amount can be reduced in the coding of the input moving image, so that the speed of the motion vector detection conforming to the motion of the input moving image can be increased.

(First Embodiment)

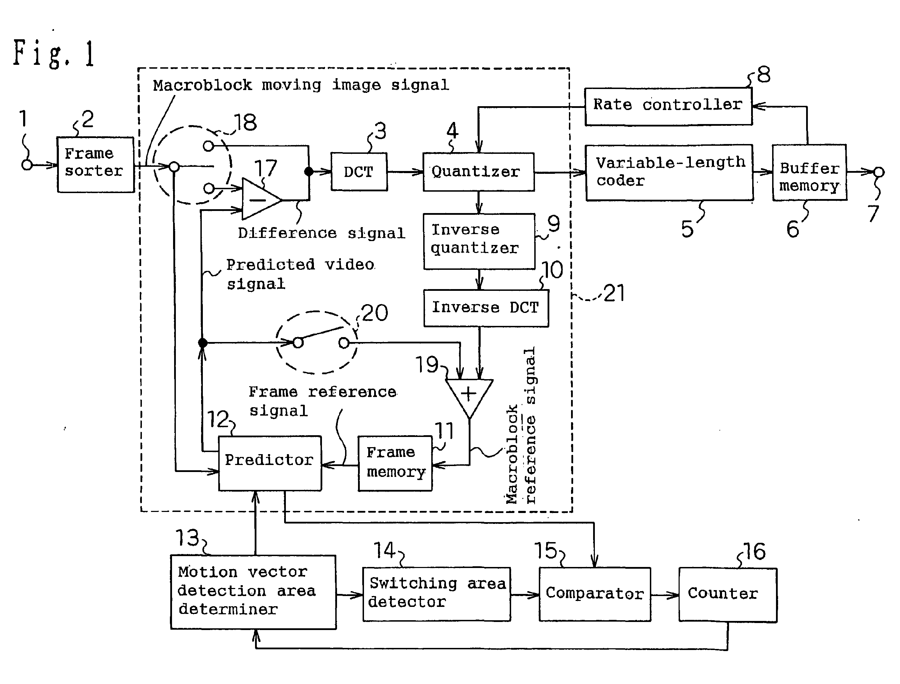

FIG. 1 is a block diagram showing the structure of a moving image compression coding apparatus according to a first embodiment of the present invention, and an example showing a case of MPEG (moving pictures experts group). Reference numeral 1 represents an input terminal. Reference numeral 2 represents a frame sorter. Reference numeral 3 represents a discrete cosine transformer (hereinafter, abbreviated as DCT). Reference numeral 4 represents a quantizer. Reference numeral 5 represents a variable-length coder. Reference numeral 6 represents a buffer memory. Reference numeral 7 represents an output terminal. Reference numeral 8 represents a rate controller. Reference numeral 9 represents an inverse quantizer. Reference numeral 10 represents an inverse DCT. Reference numeral 11 is a frame memory. Reference numeral 12 represents a predictor. Reference numeral 13 represents a detection area determiner. Reference numeral 14 represents a switching area determiner. Reference numeral 15 represents a comparator. Reference numeral 16 represents a counter. Reference numeral 17 represents a subtracter. Reference numeral 18 represents a selector switch. Reference numeral 19 represents an adder. Reference numeral 20 represents a switch.

The frame sorter 2 of the present embodiment is an example of the macroblock generating means of the present invention. The selector switch 18, the subtracter 17, the DCT 3, the quantizer 4, the inverse quantizer 9, the inverse DCT 10, the adder 19, the switch 20 and the frame memory 11 of the present embodiment are an example of the coding and decoding means of the present invention. The predictor 12 of the present embodiment is an example of the motion vector detecting means of the present invention. The switching area determiner 14, the comparator 15 and the counter 16 of the present embodiment are an example of the motion vector counting means. The detecting area determiner 13 of the present embodiment is an example of the motion vector detection area determining means of the present invention.

The operations of the blocks structured as described above will be described. Original image signals inputted from the input terminal 1 are video signals obtained by previously separating video and audio signals into audio signals and video signals. The video signals are first sorted according to the frames by the frame sorter 2, and original image video signals in units obtained by fractionizing the frames by the number of pixels (hereinafter, referred to as macroblock units) are outputted to the selector switch 18 in the order in which the signals are sorted by the frame sorter 2 (hereinafter, referred to as decoding order). The selector switch 18 selects whether to output the original image video signals in macroblock units (hereinafter, referred to as macroblock moving image signals) as they are or to subtract motion compensation predicting video signals or the like from the macroblock moving image signals by the subtracter 17.

First, a case will be described where the selector switch 18 selects the macroblock moving image signals as they are. When the macroblock moving image signal outputted from the selector switch 18 is of an I picture, a DCT signal discrete-cosine-transformed by the DCT 3 is outputted to the quantizer 4. The quantizer 4 outputs, to the variable-length coder 5 and the inverse quantizer 9, a quantized signal having its information amount reduced, by performing quantization with a predetermined quantization value fed back from the rate controller 8.

The quantized signal inputted to the variable-length coder 5 is outputted to the buffer memory 6 as a coded signal that is coded by the variable-length coder 5. The buffer memory 6 stores the coded signal until it is extracted from the output terminal 7, and outputs the generated code amount to the rate controller 8. The rate controller 8 feeds back a quantization value based on the generated code amount to the quantizer 4. The coded signal extracted from the output terminal 7 is multiplexed with an audio signal by a non-illustrated system encoder.

As for the quantized signal inputted to the inverse quantizer 9, an inversely quantized signal that is inversely quantized with a predetermined quantization value is outputted to the inverse DCT 10. The inverse DCT 10 outputs an inverse DCT signal obtained by performing an inverse discrete cosine transform on the inputted quantized signal. When the selector switch 18 selects the macroblock moving image signals as they are like in the case of an I picture, the switch 20 is turned off in synchronism with the selector switch 18, and reference video signals in macroblock units (hereinafter, referred to as macroblock reference signals) are stored in the frame memory 11 until one frame of signals are stored, without added to the inverse DCT signal by the adder 19. In the case of a P picture, a motion vector where the difference between the reference video signals in units of frames (hereinafter, referred to as frame reference signals) one frame of which are stored in the frame memory 11 and the macroblock moving image signals from the frame sorter 2 is smallest is predicted by the predictor 12, the motion vector detection area is detected, and the motion vector and the image signal after the motion compensation prediction (hereinafter, referred to as predicted video signal) is outputted.

The case of a P picture or a B picture where the selector switch 18 selects the difference signal between the macroblock moving image signal and the predicted video signal by the subtracter 17 will be described. In the case of a P picture, the difference signal obtained by subtracting the predicted video signal based on the preceding I picture or P picture from the macroblock moving image signal is outputted to the DCT 3, and a DCT signal is outputted to the quantizer 4. One of the quantized signals outputted from the quantizer 4 passes through the variable-length coder 5 and the buffer memory 6 and is stored in the buffer memory 7 until extracted from the output terminal 7, and the generated code amount is inputted to the rate controller 8 and a quantization value is fed back to the quantizer 4. The coded signal stored in the buffer memory 6 is outputted from the output terminal 7 to the system encoder similarly to the above-described case.

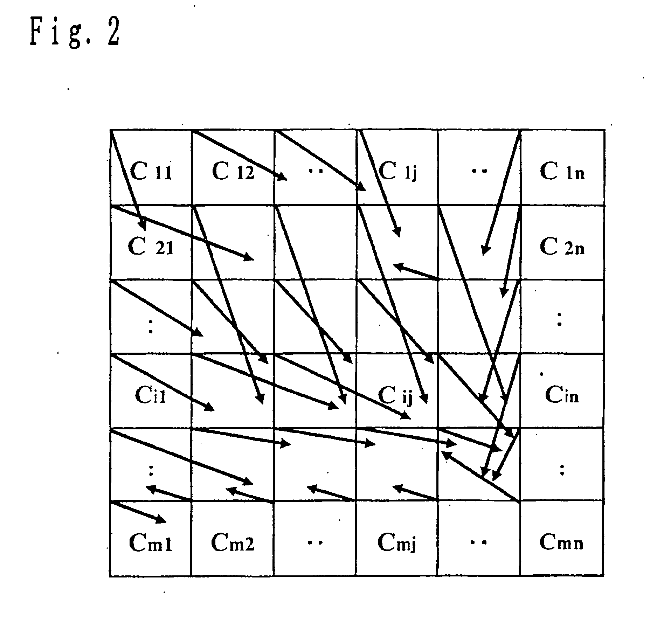

The other of the quantized signals passes through the inverse quantizer 9 and the inverse DCT 10 and is inputted to the adder 19. The switch 20 is turned on in synchronism with the selector switch 18, and the immediately preceding I picture or P picture subtracted by the subtracter 17 is added to the inverse DCT signal outputted from the inverse DCT 10 to obtain the macroblock reference signal. The macroblock reference signals added by the adder 19 are stored in the frame memory 11 until one frame of signals are stored, and the predictor 12 detects, within the motion vector detection area, a motion vector where the difference signal is lowest from the frame reference signals from the frame memory 11 and the macroblock moving image signals, and outputs motion vectors and predicted video signals, for example, as shown in FIG. 2.

When the macroblock moving image signal is of a B picture, similar processing is performed to that performed in the case of a P picture except that the difference between the predicted video signal and the macroblock moving image signal based on the preceding and succeeding I pictures or P pictures are obtained by the subtracter 17. However, when B pictures are taken into consideration, since the preceding and succeeding pictures are referred to in the case of a B picture, the improvement in accuracy is small although the algorithm updating the motion vector detection area in units of frames or the like is complicated. Therefore, the present embodiment adopts an algorithm that, in the case of a B picture, ignores the outputted macroblock moving image signal until the next P picture is selected.

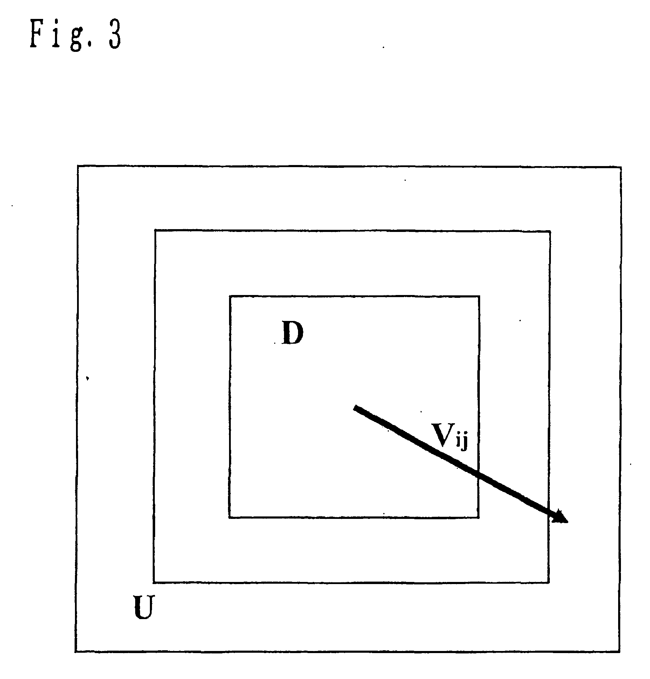

One of the signals outputted from the predictor 12 obtained in this manner is provided as a predicted video signal to be subtracted from the next macroblock moving image signal by the subtracter 17, and as for the other signal, to comparatively verify whether a motion vector exists within the motion vector detection area or not, for example, as shown in FIG. 3, motion vectors in macroblock units are outputted to the comparator 15. The area D in FIG. 3 is an area to which the motion vector detection area is reduced, and the area U is an area to which the motion vector detection area is enlarged. That is, the comparator 15 comparatively verifies whether a motion vector $V_{ij}$ corresponding to a macroblock $C_{ij}$ detected by the predictor 12 shown in FIG. 2 exists within the motion vector switching area D or U outputted from the switching area determiner 14, adoptively obtains a macroblock switching signal, and outputs it to the counter 16.

The motion vector detection areas shown in FIG. 3 will be described in more detail. FIG. 4 is a view explaining the motion vector detection areas shown in FIG. 3 in more detail. (a) of FIG. 4 shows motion vector detection area candidates. In the present embodiment, there are five motion vector detection area candidates A1, A2, A3, A4 and A5. These motion vector detection area candidates are stored in the detection area determiner 13. As the motion vector detection area used when the motion vector is detected by the predictor 12 and when the motion vector switching area is determined by the switching area determiner 14, one of the five motion vector detection area candidates A1, A2, A3, A4 and A5 is selected and used.

Assuming now that, of the motion vector detection area candidates A1, A2, A3, A4 and A5, A3 is actually used as the motion vector detection area.

As shown in (b) of FIG. 4, the area between an outermost line 13 which is the outermost line of the motion vector detection area A3 and an outermost line 13' which is the outermost line of a motion vector detection area A3' existing inside the motion vector detection area A3 corresponds to the area U described with reference to FIG. 3. The area U of FIG. 3 is determined by the switching area determiner 14. When a case where a motion vector rides on the area U satisfies a predetermined condition as described later, the motion vector detection area A3 is enlarged. At this time, the motion vector detection areas A3' and A3'' are enlarged at the same time.

Likewise, as shown in (b) of FIG. 4, the area inside an outermost line 13'' which is the outermost line of the motion vector detection area A3'' existing inside the motion vector detection area A3' corresponds to the area D described with reference to FIG. 3. The area D of FIG. 3 is determined by the switching area determiner 14, and when a case where a motion vector rides on the area D satisfies a predetermined condition as described later, the motion vector detection area A3 is reduced. At this time, the motion vector detection areas A3' and A3'' are reduced at the same time.

Moreover, the switching area determiner 14 determines the area U and the area D of FIG. 3 in accordance with the motion vector detection area.

While in the present embodiment, the comparator 15 operates only at the time of coding of P pictures because the switching of the motion vector detection area is targeted only for motion vectors based on P pictures, it is to be noted that the comparator 15 operates also at the time of coding of B pictures when B pictures are also taken into consideration.

The comparator 15 determines whether the motion vector $V_{ij}$ corresponding to the macroblock $C_{ij}$ rides on the area U of FIG. 3 or rides on the area D, and outputs the result of the determination to the counter 16 as the macroblock switching signal.

When the macroblock switching signal is inputted, the counter 16 increments the count value corresponding to the area U by one when the macroblock switching signal represents that the motion vector $V_{ij}$ corresponding to the macroblock $C_{ij}$ rides on the area U of FIG. 3, and increments the count value corresponding to the area D by one when the macroblock switching signal represents that the motion vector $V_{ij}$ corresponding to the macroblock $C_{ij}$ rides on the area D of FIG. 3.

In this manner, the counter 16 counts the count value corresponding to the area D and the count value corresponding to the area U by one frame, and the counter 16 outputs the count results to the detection area determiner 13 as switching signals in units of frames (hereinafter, referred to as frame switching signals). When the frame switching signals are inputted, the detection area determiner 13 adoptively determines the motion vector detection area in units of frames.

That is, the detection area determiner 13 determines the motion vector detection area by selecting an actually used motion vector detection area from among the motion vector detection area candidates A1, A2, A3, A4 and A5 shown in (a) of FIG. 4.

When a motion vector Q rides on the area D as shown in (a) of FIG. 5, the detection area determiner 13 selects the motion vector detection area A4 as shown in (b) of FIG. 5 to thereby reduce the motion vector detection area. Describing in detail, when the quotient when (the number of motion vectors existing in the motion vector switching area D) is divided by (the number of macroblocks existing in the period of one frame) is not less than the predetermined threshold value, the detection area determiner 13 switches the motion vector detection area to the motion vector detection area A4 based on the frame switching signal inputted from the counter 16. At this time, the motion vector detection areas A3' and A3'' are switched to A4' and A4'', respectively, at the same time. In this manner, the detection area determiner 13 reduces the motion vector detection areas. When the detection area determiner 13 selects the motion vector detection area A4 as the motion vector detection area, the selected motion vector detection area is fed back to the switching area determiner 14 and to the predictor 12. In accordance with the selection, the switching area determiner 14 determines the motion vector switching areas D and U as shown in (b) of FIG. 5.

When a motion vector R rides on the area U as shown in (b) of FIG. 6, the detection area determiner 13 enlarges the motion vector detection area by selecting the motion vector detection area A2 as shown in (b) of FIG. 6. Describing in detail, when the quotient when (the number of motion vectors existing in the motion vector switching area U) is divided by (the number of macroblocks existing in the period of one frame) is not less than a predetermined threshold value, the detection area determiner 13 switches the motion vector detection area to the motion vector detection area A2 based on the frame switching signal inputted from the counter 16. At this time, the motion vector detection areas A3' and A3'' are switched to A2' and A2'', respectively, at the same time. In this manner, the detection area determiner 13 enlarges the motion vector detection areas. When the detection area determiner 13 selects the motion vector detection area A2 as the motion vector detection area, the selected motion vector detection area is fed back to the switching area determiner 14 and to the predictor 12. In accordance with the selection, the switching area determiner 14 determines the motion vector switching areas D and U as shown in (b) of FIG. 6.

Moreover, the detection area determiner 13 neither enlarges nor reduces the motion vector detection area when the quotient when (the number of motion vectors existing in the motion vector switching area D) is divided by (the number of macroblocks existing in the period of one frame) is lower than the predetermined threshold value and the quotient when (the number of motion vectors existing in the motion vector switching area U) is divided by (the number of macroblocks existing in the period of one frame) is lower than the predetermined threshold value. That is, the detection area determiner 13 does not change the motion vector detection area.

The motion vector detection area fed back to the predictor 12 is used, as the motion vector detection area that is optimum in units of frames, as the motion vector detection area when the motion vector is predicted by the predictor 12 in the next frame unit.

For example, when the detection area determiner 13 selects the motion vector A4 as the motion vector detection area as shown in (b) of FIG. 5, the predictor 12 uses the motion vector detection area A4 in the next frame unit when predicting the motion vector.

Likewise, when the detection area determiner 13 selects the motion vector A2 as the motion vector detection area as shown in (b) of FIG. 6, the predictor 12 uses the motion vector detection area A2 in the next frame unit when predicting the motion vector.

An operation similar to the above-described one is performed in the next frame unit, and the motion vector detection area adoptively used by the predictor 12 is successively updated. In the present embodiment, an operation as described above is performed every P frame. That is, FIG. 7 shows the timing of update of the motion vector detection area. The motion vector detected in a P frame 20 is used for the detection area determiner 13 to determine the motion vector detection area in the next P frame 21. As described above, the moving image compression coding apparatus of the present embodiment switches the motion vector detection area every P frame.

In the case of an input moving image having a particularly large motion, in the conventional moving image compression coding apparatus described with reference to FIG. 11, since only the vector P riding on the outermost periphery of the motion vector detection area 320 is detected, even if a motion vector more appropriate than the motion vector P riding on the outermost periphery of the motion vector detection area 320 exits outside the motion vector detection area 320, it is impossible to detect and use such a motion vector. In the conventional moving image compression coding apparatus described with reference to FIG. 11, even in such a case, the motion vector P is detected and used instead of detecting an appropriate motion vector.

On the contrary, in the moving image compression coding apparatus of the present embodiment, when the motion vector detection area is enlarged, the motion vector riding on the area U shown in FIGs. 3, 4, 5 and 6 is taken into consideration. Therefore, even when a more appropriate motion vector exits outside the motion vector detection area and such an appropriate motion vector cannot be detected according to the prior art, by the area U being a target of consideration of the motion vector like in the present embodiment, an appropriate motion vector that cannot be detected according to the prior art can be detected.

As described above, according to the present embodiment, even in a case of an input moving image having a large motion, an appropriate motion vector can be detected and an appropriate motion vector detection area can be set.

As described above, according to the moving image compression coding apparatus of the present embodiment, since the motion vector detection area where motion vector detection is performed is replaced with an area optimized in the foremost frame unit in parallel with the processing operation of the motion vector detecting means 21 of detecting the motion vector of the moving image signal by performing compression coding, an effect is produced that the motion vector detection can be optimized while the scale of hardware such as circuitry provided in the motion vector detecting means 21 is not increased. Moreover, even in the case of a largely moving image, an appropriate motion vector can be detected, and an appropriate motion vector detection area can be set.

While in the present embodiment, the detection area determiner 13 selects an actually used motion vector detection area from among five motion vector detection area candidates, the present invention is not limited thereto. The actual motion vector detection area may be selected from among three motion vector detection area candidates, or the actual motion vector detection area may be selected from among seven motion vector detection area candidates. The detection area determiner 13 of the present embodiment stores a plurality of motion vector detection area candidates, and an actually used motion vector detection area is determined by selecting it from thereamong.

Further, while in the present embodiment, the detection area determiner 13 selects an actually used motion vector detection area from among five motion vector detection areas, the present invention is not limited thereto. The detection area determiner 13 may increase the enlargement ratio of the motion vector detection area as the number of motion vectors existing in the motion vector switching area U increases.

In this case, the detection area determiner 13 may selects a larger motion vector detection area from among preprovided motion vector detection areas as the number of motion vectors existing in the motion vector switching area U increases, or the detection area determiner 13 may generate, without preprovided with any motion vector detection area, a larger motion vector detection area as the number of motion vectors existing in the motion vector switching area U increases.

Moreover, the detection area determiner 13 may increase the reduction ratio of the motion vector detection area as the number of motion vectors existing in the motion vector switching area D increases.

In this case, the detection area determiner 13 may select a smaller motion vector detection area from among preprovided motion vector detection areas as the number of motion vectors existing in the motion vector switching area D increases, or the detection area determiner 13 may generate, without preprovided with any motion vector detection area, a smaller motion vector detection area as the number of motion vectors existing in the motion vector switching area D increases.

In the moving image compression coding apparatus of the present embodiment, as shown in (a) of FIG. 8, (b) of FIG. 8 and (c) of FIG. 8, when the motion vector detection area is small, the motion vector detection is close to a detection in units of pixels, and when the motion vector detection area is large, the motion vector ditection is a detection in which pixels are thinned out in accordance with the largeness. That is, when the detection area is large like the motion vector detection area A1 like (a) of FIG. 8, a motion vector associated with the pixels thinned out as shown by the black marks is detected, and conversely, when the motion vector detection area is small like the motion vector detection area A5 like (c) of FIG. 8, a motion vector is detected in units of pixels as shown by the black marks. Consequently, since pixels where a motion vector is obtained are thinned out in accordance with the size even when the motion vector detection area is enlarged, the amount of calculation for the motion vector detection does not increase.

By providing a plurality of kinds of motion vector detection areas as shown in FIG. 4 and selecting the motion vector detection area from among the kinds of motion vector detection areas, optimization can be achieved by appropriately enlarging or reducing the motion vector detection area in accordance with the magnitude of the motion of the input moving image, the improvement in the accuracy of the motion vector detection and the reduction in the generated signal amount by the improvement can be achieved, and the quality of the decoded moving image can be increased.

Moreover, the scale of circuitry such as the storing means required for the motion vector detection can be the one conforming to the smallest one of the motion vector detection areas, so that an apparatus capable of realizing high-quality decoded images because of the improvement in the accuracy of the motion vector detection can be made inexpensive.

By providing: the switching area determiner 14 generating a motion vector detection area switching area in accordance with the motion vector detection area from the motion vector detection area 13 in the above-described embodiment; and the comparator 15 comparing the motion vector detection area switching area and the detected motion vector with each other and determining the presence of the motion vector within the motion vector switching area, by the counter 16 storing the motion vector switching area and the determination signal which is the output signal of the comparator 15, and by determining the motion vector detection area based on the determination signal stored in the counter 16, the setting of the motion vector detection area of the motion vector detected by the motion vector detecting means 21 can be made to follow the motion of the input moving image, so that the immediacy of the motion vector detection area conforming to the motion of the input moving image can be improved.

While in the present embodiment, the motion vector detection area outputted from the detection area determiner 13 to the predictor 12 is updated in units of frames, the present invention is not limited thereto. While the motion vector detection area is adoptively determined in units of frames, the present invention is not limited thereto.

The update of the motion vector detection area outputted from the detection area determiner 13 to the predictor 12 may be performed in the period of a number, n, of units (n is a natural number satisfying n≦N). Here, N is the total number of macroblocks existing in one frame, and the total number of macroblocks which are divisional units when one frame is divided into a plurality of units is n. In this case, the counter 16 also stores the number of motion vectors existing in the motion vector switching area in the period of a number, n, of units, the motion vector detection area is switched when the quotient when (the number of motion vectors existing in the motion vector switching area) is divided by (the number of macroblocks existing in the period of a number, n, of units) is not less than the predetermined threshold value, and the switched motion vector detection area is fed back to the motion vector detection detecting means 21 and to the switching area determiner 14.

For example, when the quotient when (the number of motion vectors existing in the area D) is divided by (the number of macroblocks existing in the period of a number, n, of units) is not less than the predetermined threshold value, the motion vector detection area is switched, for example as shown in (a) of FIG. 5 and (b) of FIG. 5, from the motion vector detection area A3 to the motion vector detection area A4. That is, the motion vector detection area is reduced, and for example, when the quotient when (the number of motion vectors existing in the area U) is divided by (the number of macroblocks existing in the period of a number, n, of units) is not less than the predetermined threshold value, the motion vector detection area is switched, for example as shown in (a) of FIG. 6 and (b) of FIG. 6, from the motion vector detection area A3 to the motion vector detection area A2. That is, the motion vector detection area is enlarged.

By adopting such a structure, the improvement in the accuracy of the motion vector detection conforming to the motion of the input moving image and the reduction in the generated code amount can be achieved.

Next, the flow of a series of processings described above will be described by use of FIG. 9 with reference to the block diagram shown in FIG. 1.

First, the input moving image inputted from the input terminal 1 is sorted in the decoding order by the frame sorter 2, and becomes macroblock moving image signals where the input moving image is fractionized into a number , N, of macroblocks per frame (here, N is a natural number not less than 2) at step 31.

At step 32, whether the macroblock moving image signals extracted in the decoding order from the frame sorter 2 are of an I picture or a picture other than an I picture is determined by the selector switch 18. When it is determined that the macroblock moving image signals are of an I picture by the selector switch 18, the switch 20 is turned off.

The macroblock moving image signals determined to be of an I picture pass through the DCT 3, the quantizer 4, the inverse quantizer 9, the inverse DCT 10 and the adder 19 at step 33 and decoded signals of the macroblock moving image being an I picture are stored into the frame memory 11.

Then, at step 34, it is determined whether compression decoding of one frame of macroblock moving image signals is finished or not, and when one frame is not reached, the process returns to step 32.

Whether the macroblock moving image signals extracted from the sorter 2 are of an I picture or not is determined at step 32, and when they are not of an I picture, at step 35, whether they are of a P picture or a B picture is determined by the selector switch 18.

When it is determined that the macroblock moving image signals are of a P picture, at step 36, the subtraction between the macroblock moving image signals and the predicted video signals outputted from the predictor 12 is performed by the subtracter 17 and difference signals are outputted, and the switch 20 is turned on.

The difference signals obtained by the subtraction at step 36 pass through the DCT 3, the quantizer 4, the inverse quantizer 9 and the inverse DCT 10 at step 37, the inverse DCT signals of the P picture and the predicted video signals outputted from the predictor 12 (while the predicted video signals are ones from the immediately preceding I picture in this example, when P pictures continue, the predicted video signals are ones from the immediately preceding P picture) are added together by the adder 19, and macroblock reference signals are stored in the frame memory 11 until one frame of signals are stored. Simultaneously therewith, a predicted video signal is generated by the predictor 12 by use of a motion vector where the difference between the frame reference signal and the macroblock moving image signal from the frame sorter 2 is smallest.

The predicted video signal generated at step 37 is inputted to the comparator 15 at step 38, and the comparator 15 compares the predicted video signal with the motion vector switching area outputted from the switching area determiner 14, thereby outputting a macroblock switching signal to the counter 16. The counter 16 stores the macroblock switching signal until one frame of signals are stored.

Then, at step 34, it is determined whether compression decoding of one frame of macroblock moving image signals is finished or not, and when one frame is not reached, the process returns to step 32. While the step at which the switch 20 is turned on is step 36 in the above-described example, it is to be noted that it may be any step, may be either step 35 or step 37, as long as it is before the addition by the adder 19.

Whether the macroblock moving image signals extracted from the sorter 2 are of an I picture or not is determined at step 32, and when they are not of an I picture, at step 35, whether they are of a P picture or a B picture is determined by the selector switch 18.

When it is determined that the macroblock moving image signals are of a B picture, at step 39, the subtraction between the macroblock moving image signals and the predicted video signals outputted from the predictor 12 is performed by the subtracter 17 and difference signals are outputted. The difference signals obtained by the subtraction at step 39 pass through the DCT 3 and the quantizer 4 to generate quantized signals at step 40, it is determined at step 34 whether compression decoding of one frame of macroblock moving image signals is finished or not, and when one frame is not reached, the process returns to step 32.

When it is determined at step 34 that one frame is reached, a frame switching signal is outputted from the counter 16 to the detection area determiner 13 at step 41, the detection area determiner 13 feeds back the motion vector detection area in units of frames to the predictor 12 and outputs it also to the switching area determiner 14, and the switching area determiner 14 generates a motion vector switching area and outputs it to the comparator 15.

After the motion vector detection area in units of frames is generated and outputted to the predictor 12 at step 41, at step 42, the moving image signals terminate and whether the next frame is present or absent is determined. When the next frame is present, the process returns to the frame sorter 2, and when the next frame is absent, the processing is ended.

While the motion vector detection area is updated in units of frames in the above-described embodiment, it may be updated in units of predetermined groups of input moving image signals such as units of screens, units of frames or units of group-of-pictures (GOPs). However, it is necessary to change the motion vector detection area determiner 13, the frame memory 11 and the like according to the units of groups.

While the above embodiment is described with MPEG compression as an example, the compression decoding method is not limited to MPEG, but any compression method is adaptable that performs inter-frame prediction reducing the redundancy in the direction of time such as H.261 or H.263.

According to the present embodiment, even when a plurality of detection areas for motion vector detection is present, an optimum motion vector detection area can be selected in accordance with the speed of the motion of the input image when moving image compression coding is performed, without the hardware scale being increased, so that an excellent effect is obtained that high image quality can be realized. Moreover, even in the case of a largely moving image, an appropriate motion vector can be detected, and an appropriate motion vector detection area can be set.

Moreover, the program of the present invention is a program of causing a computer to execute operations of all or some of the steps (or processes, operations, workings or the like) of the above-described motion vector detecting method of the present invention, said program operating in concert with the computer.

Moreover, the recording medium of the present invention is a recording medium holding a program of causing a computer to execute all or some of the operations of all or some of the steps (or processes, operations, workings or the like) of the above-described motion vector detecting method of the present invention, said recording medium being computer-readable and said program that is read out performing the operations in concert with the computer.

The above-mentioned "some of the means (or apparatuses, devices or the like) " of the present invention means one or some means of the more than one means, and the above-mentioned "some of the steps (or processes, operations, workings or the like) " of the present invention means one or some steps of the more than one step.

Moreover, the above-mentioned "functions of the means (or apparatuses, devices or the like) " of the present invention means all or some of the functions of the above-mentioned means, and the above-mentioned "operations of the steps (or processes, operations, workings or the like) " of the present invention means all or some of the operations of the above-mentioned steps.

Moreover, a usage of the program of the present invention may be such that the program is recorded on a computer-readable recording medium and operates in concert with a computer.

Moreover, a usage of the program of the present invention may be such that the program is transmitted over a transmission medium, is read out by a computer and operates in concert with the computer.

Moreover, the data structure of the present invention includes databases, data formats, data tables, data lists and data kinds.

Moreover, the recording medium includes ROMs, and the transmission medium includes: transmission media such as the Internet; light; radio waves; and sound waves.

Moreover, the above-mentioned computer of the present invention is not limited to pure hardware such as a CPU, but may include firmware, an OS, and peripherals.

As described above, the structure of the present invention may be implemented either via software or via hardware.

INDUSTRIAL APPLICABILITY

As is apparent from the description given above, the present invention is capable of providing a moving image compression coding apparatus, a motion vector detecting method, a recording medium and a program capable of detecting an appropriate motion vector and setting an appropriate motion vector detection area even in a case of a largely moving image.

**Claims**

1.    A moving image compression coding apparatus comprising:

       macroblock generating means of generating a macroblock moving image signal obtained by fractionizing an input moving image into a number, N, of units per frame (here, N is a natural number not less than 2);
       coding and decoding means of compression-coding the macroblock moving image signal and then, decoding the macroblock moving image signal to generate a decoded moving image signal;
       motion vector detecting means of detecting a motion vector within a first motion vector detection area from the decoded moving image signal and the macroblock moving image signal;
       motion vector counting means of counting, as the number of first motion vectors, the number of, of the detected motion vectors, motion vectors existing between a first outermost line which is an outermost line of the first motion vector detection area and a second outermost line which is an outermost line of a second motion vector detection area existing inside the first motion vector detection area; and
       motion vector detection area determining means of enlarging the first motion vector detection area based on the counted number of first motion vectors.

2. A moving image compression coding apparatus according to claim 1, wherein the motion vector counting means counts, as the number of second motion vectors, the number of motion vectors existing in a third motion vector detection area existing inside the second motion vector detection area, and
the motion vector detection area determining means reduces the first motion vector detection area based on the counted number of second motion vectors.

3. A moving image compression coding apparatus according to claim 1, wherein the motion vector detection area determining means enlarges the first motion vector detection area when the counted number of first motion vectors is larger than a predetermined threshold value, and does not enlarge the first motion vector detection area or does not change the first motion vector detection area when the counted number of first motion vectors is smaller than the predetermined threshold value.

4. A moving image compression coding apparatus according to claim 1, wherein the motion vector detection area determining means increases an enlargement ratio of the first motion vector detection area as the counted number of first motion vectors increases.

5. A moving image compression coding apparatus according to claim 2, wherein the motion vector detection area determining means increases a reduction ratio of the first motion vector detection area as the counted number of second motion vectors increases.

6. A moving image compression coding apparatus according to claim 1, wherein the motion vector detection area determining means is preprovided with a plurality of kinds of motion vector detection areas, and
a larger motion vector detection area is selected from among the kinds of motion vector detection areas as the counted number of first motion vectors increases, and the selected motion vector detection area is set as the first motion vector detection area.

7. A moving image compression coding apparatus according to claim 2, wherein the motion vector detection area determining means is preprovided with a plurality of kinds of motion vector detection areas, and
a smaller motion vector detection area is selected from among the kinds of motion vector detection areas as the counted number of second motion vectors increases, and the selected motion vector detection area is set as the first motion vector detection area.

8. A moving image compression coding apparatus according to claim 1, wherein the motion vector detection area determining means updates the first motion vector detection area every P frame or every divisional unit obtained by dividing the P frame into a number, n, of units (here, n is a natural number of n≦N), and
when the first motion vector detection area is updated, the motion vector detection area determining means enlarges the first motion vector detection area when a quotient when the counted number of first motion vectors in the P frame or the divisional unit is divided by the number of macroblock moving image signals existing in the P frame or in the divisional unit is not less than a predetermined threshold value.

9. A moving image compression coding apparatus according to claim 1, wherein the motion vector detection area determining means updates the first motion vector detection area every P frame or every divisional unit obtained by dividing the P frame into a number, n, of units (here, n is a natural number of n≦N), and
when the first motion vector detection area is updated, the motion vector detection area determining means reduces the first motion vector detection area when a quotient when the counted number of second motion vectors in the P frame or the divisional unit is divided by the number of macroblock moving image signals existing in the P frame or in the divisional unit is not less than a predetermined threshold value.

10. A moving image compression coding apparatus according to any of claims 1, 3, 4, 6 and 8, wherein the motion vector detecting means also enlarges the second motion vector detection area when enlarging the first motion vector detection area.

11. A moving image compression coding apparatus according to claims 2, 4, 7 and 9, wherein the motion vector detecting means also reduces the third motion vector detection area when reducing the first motion vector detection area.

12. A motion vector detecting method comprising:

a motion vector detecting step of detecting a motion vector within a first motion vector detection area from a decoded moving image signal generated by compression-coding a macroblock moving image signal generated by fractionizing an input moving image into a number, N, of units per frame (here, N is a natural number not less than 2) and then, decoding the compression-coded macroblock moving image signal, and from the macroblock moving image signal;

a motion vector counting step of counting, as the number of first motion vectors, the number of, of the detected motion vectors, motion vectors existing between a first outermost line which is an outermost line of the first motion vector detection area and a second outermost line which is an outermost line of a second motion vector detection area existing inside the first motion vector detection area;

a motion vector counting step of counting the number of first motion vectors which is the number of motion vectors existing on the first outermost line which is the outermost line of the first motion vector detection area and on one or a plurality of second outermost lines adjoining the first outermost line, said second outermost lines each being the second outermost line which is the outermost line of the second motion vector detection area inside the first motion vector detection area; and

a motion vector detection area determining step of enlarging the first motion vector detection area based on the counted number of first motion vectors.

13. A program of causing a computer to execute the following steps of the motion vector detecting method according to claim 12:

the motion vector detecting step of detecting a motion vector within the first motion vector detection area from the decoded moving image signal generated by compression-coding the macroblock moving image signal generated by fractionizing an input moving image into a number, N, of units per frame (here, N is a natural number not less than 2) and then, decoding the compression-coded macroblock moving image signal, and from the macroblock moving image signal;

the motion vector counting step of counting, as the number of first motion vectors, the number of, of the detected motion vectors, motion vectors existing between the first outermost line which is the outermost line of the first motion vector detection area and the second outermost line which is the outermost line of the second motion vector detection area existing inside the first motion vector detection area; and

the motion vector detection area determining step of enlarging the first motion vector detection area based on the counted number of first motion vectors.

14. A computer-processable recording medium holding the program according to claim 13.

## Fig. 1

Macroblock moving image signal

1

2 Frame sorter

18

17 −

Difference signal

3 DCT

4 Quantizer

Rate controller 8

Variable-length coder 5

Buffer memory 6

7

Inverse quantizer 9

Predicted video signal

20

Inverse DCT 10

21

19 +

Macroblock reference signal

Frame reference signal

12 Predictor

11 Frame memory

13 Motion vector detection area determiner

14 Switching area detector

15 Comparator

16 Counter

EP 1 460 854 A1

# F i g. 2

Fig. 3

EP 1 460 854 A1

Fig. 4 (a)

A1  A2  A3  A4  A5

Fig. 4 (b)

A3  A3'  A3"

$\ell 3$
$\ell 3'$
$\ell 3"$

D        U

Fig. 5 (a)

Fig. 5 (b)

A3 A3' A3"

A4 A4' A4"

D

Q

U

D

U

EP 1 460 854 A1

Fig. 6 (a)

A3  A3'  A3"

D        U

R

Fig. 6 (b)

A2  A2'  A2"

D        U

EP 1 460 854 A1

# Fig. 7

I  B  B  P  B  B  P

20  ↓        ↑  21

Detection ⟶ Area switching

⟶ Time

# Fig. 8 (a)          # Fig. 8 (b)          # Fig. 8 (c)

A1

A3

A5

Fig. 9-1

```
                    ( Start )
                        │
            ┌───────────────────────────┐
            │  Sort in decoding order   │──S31
            └───────────────────────────┘
                        │
                   ╱─────────╲          S32
                  ╱ Determine  ╲
                 ╱ whether I picture╲────── No ──────┐
                 ╲ or not I picture ╱                │
                  ╲               ╱              ╱─────────╲   S35
                   ╲─────────────╱              ╱ P picture? ╲── No ──┐
                        │ Yes                   ╲           ╱         │
                        │            S36         ╲─────────╱          │
                        │             │              │ Yes            │
                        │    ┌─────────────────────┐ │                │  S39
                        │    │ Output difference   │ │    ┌──────────────────────┐
                        │    │ signals between     │ │    │ Perform subtraction   │
                        │    │ macroblock moving   │ │    │ between macroblock    │
                        │    │ image signals and   │ │    │ moving image signals  │
                        │    │ predicted video     │ │    │ and predicted video   │
                        │    │ signals             │ │    │ signals, and output   │
                        │    └─────────────────────┘ │    │ difference signals    │
         S33            │              │             │    └──────────────────────┘
          │             │    ┌─────────────────────┐ │                │
┌──────────────────┐    │    │ Store macroblock    │ │    ┌──────────────────────┐
│ Store decoded    │    │    │ reference signals   │ │    │ Generate quantized    │
│ signals of       │    │    │ in frame memory and │ │    │ signals               │
│ macroblock moving│    │    │ generate predicted  │ │    └──────────────────────┘
│ image being I    │    │    │ video signal        │ │                │
│ picture          │    │    └─────────────────────┘─S37            S40
└──────────────────┘    │              │
                        │    ┌─────────────────────┐
                        │    │ Compare predicted   │
                        │    │ video signal with   │
                        │    │ motion vector       │
                        │    │ switching area      │──S38
                        │    └─────────────────────┘
                        │              │
        ①  ②            │              ③
```

# Fig. 9-2

① ② ③

**S34**
Compression decoding of one frame of macroblock moving image signals finished?

No →

Yes ↓

Generate motion vector detection area in units of frames — **S41**

**S42**
Next frame present?

No →

Yes ↓

End

EP 1 460 854 A1

Fig. 10

# Fig. 11

Fig. 12

EP 1 460 854 A1

# Fig. 13

```
                                    ○
                                    │
                                    ▼
                        ┌───────────────────────┐
                        │ Read in motion vector │ S21
                        │ of preceding frame    │
                        └───────────────────────┘
                                    │
                                    ▼
                        ┌───────────────────────┐
                        │ Count the number of   │ S22
                        │ vectors taking maximum│
                        │ value                 │
                        └───────────────────────┘
                                    │
                                    ▼
    S25                        ╱ The ╲  S23
     ┌───────────────────┐ No ╱ number ╲
     │ Count the number  │◄──╲ not less ╱
     │ of vectors        │    ╲ than  ╱
     │ exceeding 1/2     │     ╲ 50%?╱
     │ the maximum value │       │ Yes
     └───────────────────┘       ▼
              │          ┌──────────────────┐
              ▼          │ Subsample input  │ S24
         ╱ The ╲         │ to error         │
      No╱ number ╲       │ calculating      │
     ──╲ not more╱       │ circuit          │
        ╲ than  ╱        └──────────────────┘
         ╲10%? ╱ S26            │
           │ Yes                │
           ▼                    │
     ┌──────────────┐           │
     │ Not subsample│           │
     │ input to     │           │
     │ error        │           │
     │ calculating  │           │
     │ circuit      │           │
     └──────────────┘ S27       │
           │                    │
           └─────────►──────────┤
                                ▼
                                ○
```

Fig. 14

320

P

h

## INTERNATIONAL SEARCH REPORT

International application No.

PCT/JP02/13413

| A. CLASSIFICATION OF SUBJECT MATTER |
|---|
| Int.Cl⁷ H04N7/32 |

According to International Patent Classification (IPC) or to both national classification and IPC

| B. FIELDS SEARCHED |
|---|
| Minimum documentation searched (classification system followed by classification symbols)<br>    Int.Cl⁷ H04N7/24-7/68 |

Documentation searched other than minimum documentation to the extent that such documents are included in the fields searched
    Jitsuyo Shinan Koho        1957–1996    Toroku Jitsuyo Shinan Koho    1994–2003
    Kokai Jitsuyo Shinan Koho    1975–2003    Jitsuyo Shinan Toroku Koho    1996–2003

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 11-55677 A (Fujitsu Ltd.),<br>26 February, 1999 (26.02.99),<br>Full text; all drawings<br>(Family: none) | 1-14 |
| A | JP 8-307880 A (KDD Kabushiki Kaisha),<br>22 November, 1996 (22.11.96),<br>Full text; all drawings<br>& US 5841476 A | 1-14 |
| A | JP 10-23420 A (Matsushita Electric Industrial Co.,<br>Ltd.),<br>23 January, 1998 (23.01.98),<br>Full text; all drawings<br>(Family: none) | 1-14 |

| ☒ Further documents are listed in the continuation of Box C. | ☐ See patent family annex. |
|---|---|

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such |
| "O" document referring to an oral disclosure, use, exhibition or other means | combination being obvious to a person skilled in the art |
| "P" document published prior to the international filing date but later than the priority date claimed | "&" document member of the same patent family |

| Date of the actual completion of the international search<br>    07 April, 2003 (07.04.03) | Date of mailing of the international search report<br>    22 April, 2003 (22.04.03) |
|---|---|
| Name and mailing address of the ISA/<br>    Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP02/13413

C (Continuation).   DOCUMENTS CONSIDERED TO BE RELEVANT

| Category* | Citation of document, with indication, where appropriate, of the relevant passages | Relevant to claim No. |
|---|---|---|
| A | JP 9-284776 A  (Sony Corp.),<br>31 October, 1997 (31.10.97),<br>Full text; all drawings<br>(Family: none) | 1-14 |
| A | JP 9-55941 A  (Sony Corp.),<br>25 February, 1997 (25.02.97),<br>Full text; all drawings<br>& US 5883674 A          & CN 1151664 A<br>& KR 97012224 A | 1-14 |
| A | JP 11-127437 A  (NEC Corp.),<br>11 May, 1999 (11.05.99),<br>Full text; all drawings<br>(Family: none) | 1-14 |

Form PCT/ISA/210 (continuation of second sheet) (July 1998)